# EUROPÄISCHE PATENTANMELDUNG

(11) **EP 1 048 520 A2**
(43) Veröffentlichungstag der Anmeldung: **02.11.2000**
(21) Anmeldenummer: 00102899.2
(22) Anmeldetag: 12.02.2000
(51) Int. Cl.: B60Q 1/00, B60Q 1/04

(54) **Halterung für einen Scheinwerfer eines Fahrzeuges**

(30) Priorität: 28.04.1999 DE 19919256
(71) Anmelder: Dr.Ing. h.c.F. Porsche Aktiengesellschaft, 70435 Stuttgart (DE)
(72) Erfinder: Schmid, Markus, 71297 Mönsheim (DE); Baumgärtner, Frank, 76689 Karlsdorf-Neuthard 2 (DE)

(57) **Zusammenfassung**

Die Erfindung betrifft eine Halterung für einen Scheinwerfer eines Fahrzeuges,wobei der Scheinwerfer von einem endseits des Fahrzeuges angeordeten Verkleidungsteil zumindest bereichsweise überdeckt ist. Um eine Halterung für einen Scheinwerfer eines Fahrzeuges zu schaffen, bei der eine Demontage des Verkleidungsteiles nicht notwendig ist, wird vorgeschlagen, daß der Scheinwerfer nach oben entnehmbar gehalten ist.

## Beschreibung

Die Erfindung betrifft eine Halterung für einen Scheinwerfer eines Fahrzeuges nach dem Oberbegriff des Patentanspruches 1.

Bei Fahrzeugen werden die Scheinwerfer üblicherweise in Fahrtrichtung gesehen von vorne an einem Querträger oder ähnlichem montiert. Anschließend werden dann die den Bug des Fahrzeuges abdeckenden Verkleidungsteile montiert.

Im Schadensfall, d.h. wenn der Scheinwerfer aufgrund Beschädigung auszutauschen ist, muß bei dieser bekannten Halterung des Scheinwerfers zunächst das Verkleidungsteil entfernt und nach dem Einbau des neuen Scheinwerfers neu montiert und justiert werden.

Gegenüber diesem Stand der Technik ist es Aufgabe der Erfindung, eine Halterung für einen Scheinwerfer eines Fahrzeuges zu schaffen, bei der eine Demontage des Verkleidungsteiles nicht notwendig ist.

Diese Aufgabe wird erfindungsgemäß mit den Merkmalen des Patentanspruches 1 gelöst. Dadurch, daß mit der erfindungsgemäßen Halterung der Scheinwerfer nach oben entnehmbar ist, kann der Scheinwerfer demontiert und montiert werden, ohne daß das Verkleidungsteil demontiert werden muß. Von besonderem Vorteil ist es in diesem Zusammenhang, daß neben den reinen Montagearbeiten am Verkleidungsteil auch die Einstellarbeiten am Verkleidungsteil entfallen, die aufgrund der üblicherweise am Bugbereich eines Fahrzeuges anzutreffenden großen Zahl von aneinandertreffenden Verkleidungsteilen besonders aufwendig sind.

Vorteilhafte Weiterbildungen der Erfindung sind in den Unteransprüchen beschrieben.

So wird vorgeschlagen, die Halterung so auszubilden, daß der Scheinwerfer auch von vorn, d.h. entgegen der Fahrtrichtung, einzusetzen ist. Diese Weiterbildung liegt die Erkenntnis zugrunde, daß es bei der Erstmontage des Scheinwerfers, besonders in Verbindung mit der Vormontage eines Frontend-Modules, im Sinne einer erleichterten Montierbarkeit von Vorteil ist, wenn der Scheinwerfer in diesem Stadium von vorne eingebaut werden kann. Da zu diesem Zeitpunkt das Verkleidungsteil noch nicht angebaut ist, entstehen durch die Montage von vorne auch keine zusätzlichen Nachteile.

Weiterhin wird vorgeschlagen, ein oberhalb des Scheinwerfer verlaufendes Bauteil, beispielsweise einen Schloß-Querträger, abnehmbar zu gestalten. Durch diese Maßnahme ist es möglich, den Scheinwerfer nach oben entnehmbar zu halten, ohne daß hierzu oberhalb des Scheinwerfers eine Aussparung oder ähnliches vorzusehen ist. Stattdessen wird zur Entnahme des Scheinwerfers nach oben das oberhalb des Scheinwerfers verlaufende Bauteil demontiert und nach der erneuten Montage des Scheinwerfers wieder montiert. Da es sich bei diesem Bauteil nicht um ein Verkleidungsteil handelt, ist neben der gegenüber einem Verkleidungsteil deutlich einfacheren Montage keine besondere Einstellung notwendig, wie sie beispielsweise bei Verkleidungsteilen zum Einstellen von Spaltmaßen zu angrenzenden Verkleidungsteilen erforderlich ist. Weiterhin kann dieses Bauteil so ausgebildet sein, daß der Scheinwerfer auch an diesem Bauteil befestigt ist. Damit kann ein Teil der Befestigungspunkte des Scheinwerfers an dem oberhalb des Scheinwerfers abnehmbar gehaltenen Bauteil vorgesehen sein und es sind keine zusätzlichen Bauteile notwendig. Ergänzend ist es möglich, neben den Haltepunkten an dem Bauteil auch Anschläge oder Bezugspunkte zur Ausrichtung des Scheinwerfers bei der Montage vorzusehen. Vorteilhaft ist auch, wenn die Richtung, in der das Bauteil abgenommen werden kann, im wesentlichen mit der Entnahmerichtung des Scheinwerfers übereinstimmt, d.h. im wesentlichen so verläuft, daß der Scheinwerfer am montierten Verkleidungsteil vorbei bewegbar ist.

Insbesondere die Demontage des Scheinwerfers wird erleichtert, wenn, wie weiterhin vorgeschlagen, die Befestigungselemente des Scheinwerfers im wesentlichen in der Abnahmerichtung des oberhalb des Scheinwerfers verlaufenden Bauteiles bzw. in der Abnahmerichtung des Scheinwerfers angeordnet sind. Dies bedeutet beispielsweise für Schrauben als Befestigungselemente, daß die Schraubenachse im wesentlichen in Abnahmerichtung verläuft. Bei dieser Anordnung sind die Befestigungselemente auch bei montiertem Verkleidungsteil leicht lösbar; darüber hinaus ist auch eine Vormontage des Scheinwerfers am abnehmbaren Bauteil möglich, da nunmehr die Montagerichtung des abnehmbaren Bauteiles und die Befestigungsrichtung der noch zu befestigenden Befestigungselemente am Scheinwerfer im wesentlichen übereinstimmt.

Besondere Vorteile ergeben sich bei der Verwendung der erfindungsgemäßen Halterung in einem Frontend-Modul. Ein Frontend-Modul faßt die wesentlichen, zwischen Längsträgern des Fahrzeuges im Bugbereich angeordneten Komponenten zu einer Vormontageeinheit zusammen. Da beim Zusammenbau dieser Vormontageeinheit noch keine Verkleidungsteile montiert sind, stehen für die Erstmontage des Scheinwerfers verschiedene Einbaurichtungen zur Verfügung. In diesem Zusammenhang kann es auch von Vorteil sein, den Scheinwerfer in Einbaulage des Frontend-Moduls gesehen von vorne einzubauen. Dies gilt besonders dann, wenn in Einbaulage gesehen, oberhalb des Scheinwerfers ein abnehmbarer Querträger verläuft.

Die Erfindung ist nachstehend anhand des in den Figuren dargestellten Ausführungsbeispieles näher beschrieben.

Es zeigen:
- Fig. 1: ein Frontend-Modul im vormontierten Zustand sowie Längsträger des Fahrzeuges hierzu,
- Fig. 2: eine Explosionsskizze zur Montage von Scheinwerfern am Frontend-Modul,
- Fig. 3: einen Schnitt nach der Linie III-III der Fig. 2 in größerer Darstellung, und
- Fig. 4: eine Explosionsskizze zur Montage eines Schloß-Querträgers am Frontend-Modul.

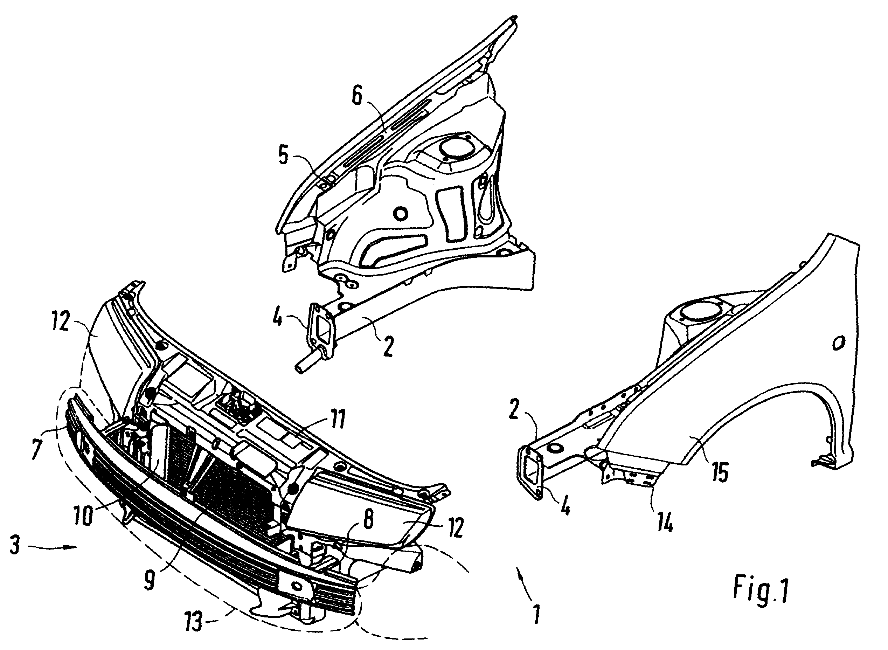

In der Übersicht nach Fig. 1 sind von einem nicht näher dargestellten Fahrzeug nur die im Bugbereich 1 angeordneten Längsträger 2 dargestellt. Ein vormontiertes Frontend-Modul 3 ist zur Montage an Stirnflächen 4 der Längsträger 2 sowie an weiteren Anschlußpunkten 5 von oberen Längsträgern 6 vorgesehen. Das Frontend-Modul 3 enthält als wesentliche Komponenten einen Stoßfänger-Querträger 7, eine Prallbox 8, einen Kühler 9, eine Aufnahme 10 für den Kühler 9, einen Schloß-Querträger 11 sowie Scheinwerfer 12.

Später, d.h. nach der Montage des Frontend-Modules 3 an die Längsträger 2, wird im Bugbereich 1 des Fahrzeuges ein skizziert dargestelltes Verkleidungsteil 13 angebracht, das sowohl mit dem Frontend-Modul 3 wie auch mit Anschlüssen 14 an Kotflügeln 15 verbunden ist. Das Verkleidungsteil 13 überdeckt dann insbesondere den Stoßfänger-Querträger 7 und den Kühler 9 und weist paßgenaue Ausschnitte für die Scheinwerfer 12 auf, die im montierten Zustand außenhautbündig zum Verkleidungsteil 13 angeordnet sind.

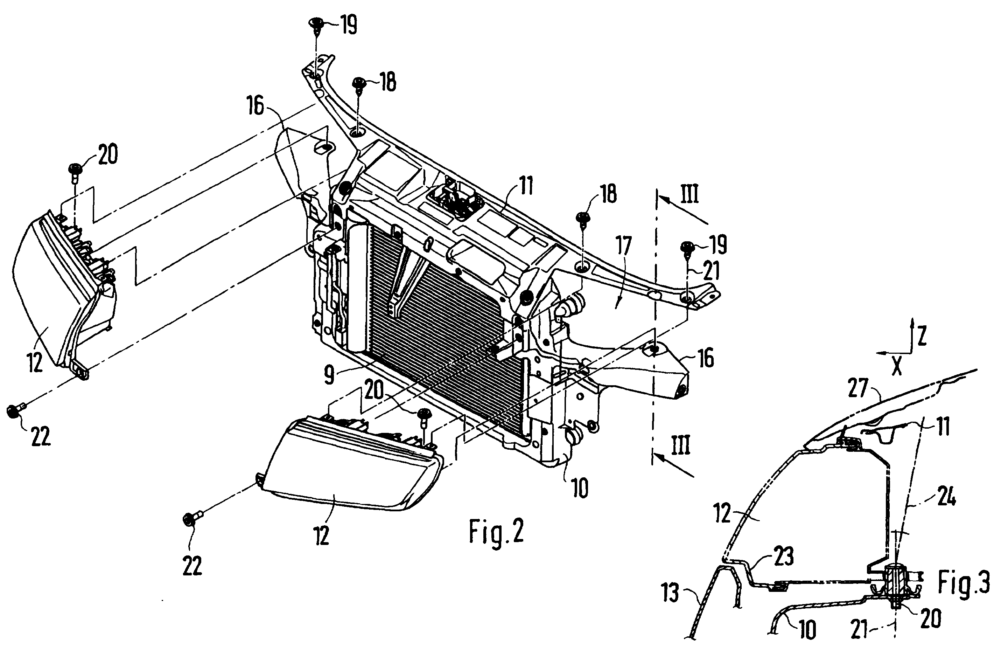

Fig. 2 zeigt einen Zwischenstand bei der Vormontage des Frontend-Modules 3. Hier ist der Kühler 9 bereits in den Montagerahmen 10 eingebaut und oben am Montagerahmen 10 ist der Schloß-Querträger 11 angebaut.

In dem darauf folgenden dargestellten Schritt werden nun die Scheinwerfer 12 in ihren zwischen dem Schloß-Querträger 11 und einer am Montagerahmen 10 seitlich vorgesehenen Konsole 16 gebildeten Einbauräumen 17 eingebracht und dort mit Hilfe von Schrauben 18 bis 20 befestigt. Hierbei ist zu beachten, daß die Schraubenlängsachsen, hier beispielsweise die Schraubenlängsachse 21 der Schraube 20, im wesentlichen in Richtung einer Fahrzeughochachse Z verlaufen. Eine vierte Schraube 22 dient zur Einstellung der Lage der Scheinwerfer 12 und liegt hierzu am Montagerahmen 10 lediglich an. Die Schraube 22 ist auch bei montierter Verkleidung 13 durch eine in der Verkleidung 13 vorgesehene (hier nicht dargestellte) Lüftungsöffnung hindurch zugänglich.

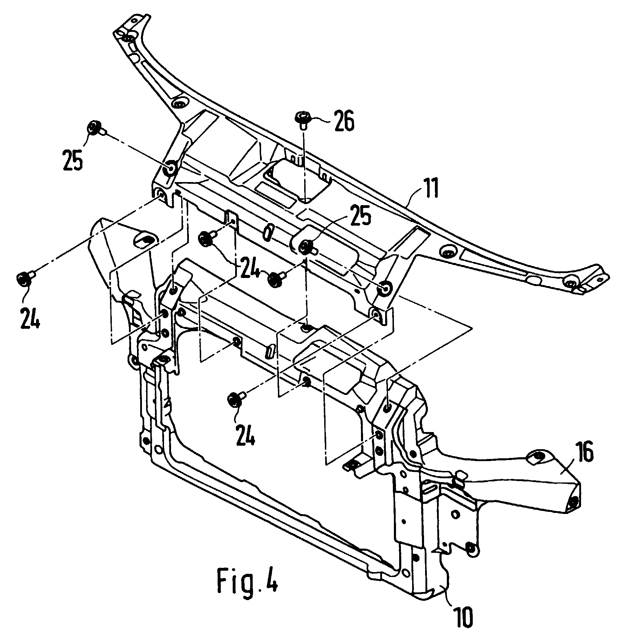

Fig. 3 zeigt die Einbausituation des Scheinwerfers 12 im Bereich der Schraube 20 nochmals im Detail. Gut zu erkennen ist, daß das Verkleidungsteil 13 und der Scheinwerfer 12 außenhautbündig zueinander angeordnet sind und daß eine am Scheinwerfer 12 vorgesehene Stufe 23 vom Verkleidungsteil 13 überdeckt wird, so daß der Scheinwerfer 12 bei montierter Verkleidung 13 nicht in Fahrtrichtung X zu entnehmen ist.

Schließlich ist in Fig. 3 eine Wirklinie 24 eingezeichnet, die den größten Winkel anzeigt, unter der die Schraube 20 noch von einem Werkzeug erfaßt werden kann. Deutlich zu erkennen ist, daß dieser Winkel es noch erlaubt, die Schraube 22 auch bei montiertem Schloß-Querträger 11 anzuziehen oder zu lösen.

Fig. 4 zeigt die Montage des Schloß-Querträgers 11, hier am Beispiel eines Montageschrittes, der vor dem in Fig. 2 dargestellten Montageschritt liegt. Der Schloß-Querträger 11 wird hierbei von Schrauben 24, die in Fahrtrichtung X von vorne montiert werden, durch zwei Schrauben 25, die von schräg oben eingeschraubt werden sowie einer Schraube 26, die in Z-Richtung von oben eingeschraubt wird, gehalten. Die Schrauben 24 bis 26 sind auch bei montiertem Frontend-Modul 3 zugänglich, da sie zum einen im Abdeckbereich einer Haube 27 (vgl. Fig. 3) angeordnet sind, jedenfalls aber nicht von der Verkleidung 13 überdeckt werden. Das Lösen der Schrauben 24 bis 26 ist somit auch dann möglich, wenn das Frontend-Modul 3 und die Verkleidung 13 am Fahrzeug montiert sind.

## Patentansprüche

1. Halterung für einen Scheinwerfer eines Fahrzeuges, wobei der Scheinwerfer von einem endseits des Fahrzeuges angeordeten Verkleidungsteil zumindest bereichsweise überdeckt ist, dadurch gekennzeichnet, daß der Scheinwerfer sowohl in Richtung des Verkleidungsteiles wie auch nach oben entnehmbar gehalten ist.

2. Halterung nach Anspruch 1, dadurch gekennzeichnet, daß ein oberhalb des Scheinwerfers verlaufendes Bauteil abnehmbar gehalten ist.

3. Halterung nach Anspruch 2, dadurch gekennzeichnet, daß der Scheinwerfer auch an dem Bauteil befestigt ist, und der Scheinwerfer höchstens in Richtung des Verkleidungsteiles und in Abnahmerichtung des Bauteiles an diesem anliegt.

4. Halterung nach Anspruch 3, dadurch gekennzeichnet, daß die Richtung des Verkleidungsteiles und die Abnahmerichtung des Bauteiles im wesentlichen senkrecht zu einander stehen.

5. Halterung nach einem der vorstehenden Anssprüche, dadurch gekennzeichnet, daß Befestigungselemente der Scheinwerfers im wesentlichen in Abnahmerichtung des Bauteiles lösbar sind.

6. Halterung nach einem der vorstehenden Anssprüche, dadurch gekennzeichnet, daß das Bauteil ein Schloß-Querträger ist.

7. Verwendung der Halterung nach einem der Ansprüche 1 bis 6 in einem Frontend-Modul.
